# EUROPÄISCHE PATENTSCHRIFT

(11) **EP 3 227 152 B1**
(45) Veröffentlichungstag und Bekanntmachung des Hinweises auf die Patenterteilung: **29.07.2020**
(21) Anmeldenummer: 15775238.7
(22) Anmeldetag: 08.10.2015
(51) Int. Cl.: B60T 17/02, B60T 8/40, B60T 17/04, F04B 11/00

(54) **DRUCKÄNDERUNGSDÄMPFER FÜR EINE HYDRAULISCHE FAHRZEUGBREMSANLAGE UND ENTSPRECHENDE FAHRZEUGBREMSANLAGE**
PRESSURE MODIFYING DAMPENER FOR A HYDRAULIC BRAKE SYSTEM AND CORRESPONDING BRAKE SYSTEM
ÉTOUFFOIR DE MODIFICATION DE PRESSION POUR UN SYSTÈME DE FREINS HYDRAULIQUE, ET SYSTÈME DE FREINS CORRESPONDANT

(30) Priorität: 04.12.2014 DE 102014224829
(43) Veröffentlichungstag der Anmeldung: 11.10.2017
(73) Patentinhaber: Robert Bosch GmbH, 70442 Stuttgart (DE)
(72) Erfinder: GAERTNER, Oliver, 74232 Abstatt (DE); GEILFUSS, Alexander, 74360 Ilsfeld (DE)
(86) Internationale Anmeldenummer: PCT/EP2015/073248
(87) Internationale Veröffentlichungsnummer: WO 2016/087094

(56) Entgegenhaltungen:
- EP-A1- 0 407 721
- DE-A1- 3 912 937
- DE-A1-102005 009 658

## Beschreibung

Die Erfindung betrifft einen Druckänderungsdämpfer für eine schlupfgeregelte, hydraulische Fahrzeugbremsanlage sowie eine hydraulische Fahrzeugbremsanlage mit einem solchen Druckänderungsdämpfer.

### Stand der Technik

Schlupfgeregelte Fahrzeugbremsanlagen weisen üblicherweise eine Kolbenpumpe als Hydropumpe auf, die aufgrund ihrer pulsierenden Förderweise Druckschwingungen in geförderter Bremsflüssigkeit erzeugt. Zur Dämpfung der Druckschwingungen ist es bekannt, einen Druckänderungsdämpfer an eine Druckseite der Kolbenpumpe anzuschließen, der die Druckänderungen beim Fördern der Bremsflüssigkeit mit der Kolbenpumpe dämpft und dadurch eine Geräuscherzeugung und eine Rückwirkung auf einen Hauptbremszylinder und damit auf ein Fußbremspedal oder einen Handbremshebel mindert. Außerdem verbessert die Dämpfung der Druckschwingungen in der Bremsflüssigkeit eine Regelgüte der Schlupfregelung.

### Offenbarung der Erfindung

Ein aus der DE 39 12 937 A1 bekannter Druckänderungsdämpfer mit den Merkmalen nach dem Oberbegriff des Anspruchs 1 weist ein beispielsweise rohr- oder domförmiges Dämpfergehäuse auf, in dem ein schlauchförmiges und elastisch verformbares Dämpferelement angeordnet ist. Vorzugsweise weist das Dämpferelement ein offenes und ein geschlossenes Ende auf. Das Dämpferelement wird innen oder außen mit einem Fluid beaufschlagt, dessen etwaige Druckänderungen gedämpft werden sollen. Solche Druckänderungen sind Druckschwingungen, Druckpulsationen und stufen- oder schlagartige Druckänderungen, wobei die Aufzählung beispielhaft und nicht abschließend ist. Darüber hinaus weist das bekannte Dämpferelement außen eine Wellung auf, wobei die Wellung beispielsweise umlaufend oder schraubenlinienförmig sein kann.

Vorzugsweise weist die Wellung einen runden Wellenquerschnitt auf, es sind aber beispielsweise auch eckige Wellenquerschnitte möglich. Erfindungsgemäß weist das Dämpferelement auf der Innenseite ebenfalls eine Wellung auf. Wellentäler sind an der Innenseite um weniger als eine halbe Wellenlänge versetzt angeordnet wie Wellenberge auf der Außenseite und umgekehrt, so dass eine Wanddickenänderung in einer Längsrichtung des Dämpferelements verkleinert ist im Vergleich mit einem Dämpferelement, das nur außen eine Wellung aufweist und innen wellenfrei ist.

Aufgrund der gleichmäßigeren Wanddicke weist das Dämpferelement des erfindungsgemäßen Druckänderungsdämpfers eine gleichmäßigere Elastizität auf und ermöglicht eine größere Wellenhöhe der Wellung auf der Außenseite mit höherer Steifigkeit in Wellentälern und/oder höherer Elastizität an Wellenbergen der Wellung auf der Außenseite des Dämpferelements. Auf diese Weise ermöglicht die Erfindung ein verbessertes Dämpfungsverhalten.

Die Unteransprüche haben vorteilhafte Ausgestaltungen und Weiterbildungen der im Anspruch 1 angegebenen Erfindung zum Gegenstand. In bevorzugter Ausgestaltung der Erfindung weist das Dämpfungselement eine elastisch veränderliche Wanddicke auf (Anspruch 6), ist verformungsdämpfend, womit gemeint ist, dass eine elastische Verformung des Dämpferelements Energie verbraucht und dadurch Verformungen dämpft (Anspruch 7), und besteht vorzugsweise aus einem Elastomer (Anspruch 8), das die vorgenannten beiden Eigenschaften aufweist.

Weiterer Gegenstand der Erfindung ist eine hydraulische Fahrzeugbremsanlage mit einem Druckänderungsdämpfer der vorstehend erläuterten Art (Anspruch 9), die vorzugsweise schlupfgeregelt ist und eine Hydropumpe (Anspruch 10), beispielsweise eine Kolbenpumpe aufweist und mit deren Druckseite der Druckänderungsdämpfer kommuniziert und Druckschwingungen in geförderter Bremsflüssigkeit dämpft.

### Kurze Beschreibung der Zeichnung

Die Erfindung wird nachfolgend anhand eines in der Zeichnung dargestellten Ausführungsbeispiels näher erläutert. Es zeigen:
- Figur 1: einen Hydraulikschaltplan einer erfindungsgemäßen Fahrzeugbremsanlage mit einem Druckänderungsdämpfer gemäß Figur 2; und
- Figur 2: einen Achsschnitt eines erfindungsgemäßen Druckänderungsdämpfers.

### Ausführungsform der Erfindung

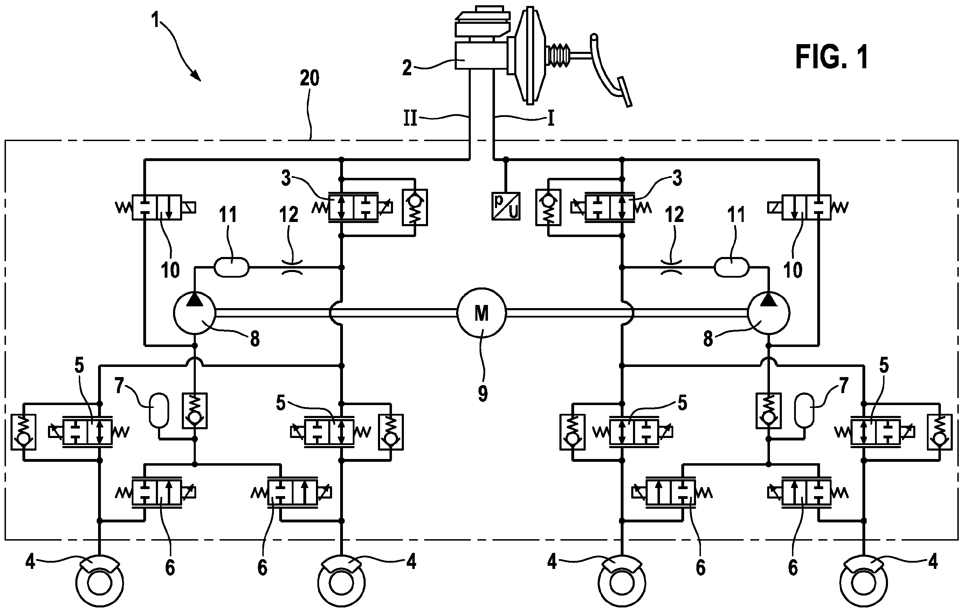

Die in Figur 1 dargestellte, erfindungsgemäße hydraulische Fahrzeugbremsanlage 1 weist einen Zweikreis-Hauptbremszylinder 2 auf, an den zwei Bremskreise I, II über je ein Trennventil 3 angeschlossen sind. Radbremsen 4 sind über Einlassventile 5 hydraulisch parallel an die Trennventile 3 und über Auslassventile 6 an einen Hydrospeicher 7 und eine Saugseite einer Hydropumpe 8 angeschlossen. Es ist jeder Radbremse 4 ein Einlassventil 5 und ein Auslassventil 6 zugeordnet. Jeder Bremskreis I, II weist einen Hydrospeicher 7 und eine Hydropumpe 8 auf, an die die Radbremsen 4 des jeweiligen Bremskreises I, II über die Auslassventile 6 gemeinsam angeschlossen sind. In der dargestellten und beschriebenen Ausführungsform weist jeder Bremskreis I, II zwei Radbremsen 4 auf, was allerdings nicht zwingend für die Erfindung ist. Die Hydropumpen 8 werden gemeinsam mit einen Elektromotor angetrieben. Die Saugseiten der Hydropumpen 8 sind durch Ansaugventile 10 mit dem Hauptbremszylinder 2 verbindbar. Auf Druckseiten der Hydropumpen 8 sind Druckänderungsdämpfer 11 und im Anschluss Drosseln 12 angeschlossen, durch die die Druckseiten der Hydropumpen 8 zwischen den Trennventilen 3 und den Einlassventilen 5 an die Bremskreise I, II angeschlossen sind. Die beschriebenen Ventile 3, 5, 6, 10 sind 2/2-Magnetventile und bilden zusammen mit den Hydropumpen 8, den Hydrospeichern 7, eine Schlupfregelung 20 der Fahrzeugbremsanlage 1. Die Druckänderungsdämpfer 11 und die Drosseln 12 sind ebenfalls Bestandteil der Schlupfregelung 20. Solche Schlupfregelungen 20 hydraulischer Fahrzeugbremsanlagen und ihre Funktion sind dem Fachmann geläufig und werden hier nicht weiter erläutert.

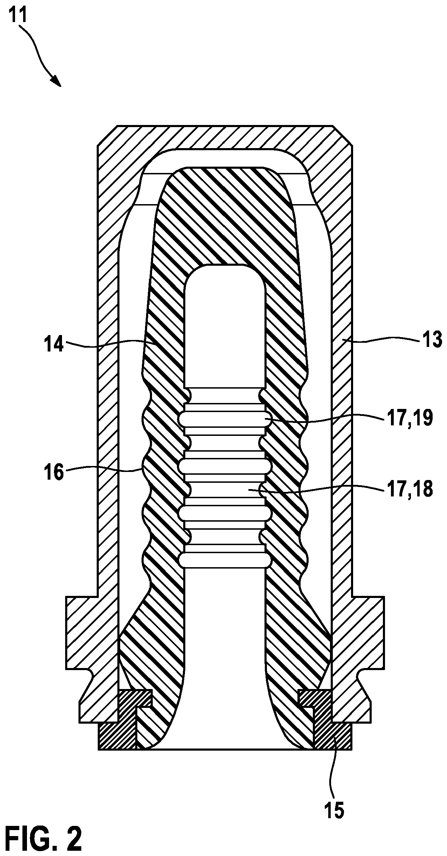

Einen erfindungsgemäßen Druckänderungsdämpfer 11 zeigt Figur 2. Der Druckänderungsdämpfer 11 weist ein rohrförmiges Dämpfergehäuse 13 mit einem offenen und einem geschlossenen Ende auf, was auch als domförmig aufgefasst werden kann. In dem Dämpfergehäuse 13 ist ein schlauchförmiges Dämpferelement 14 angeordnet, das ebenfalls ein offenes und ein geschlossenes Ende aufweist, das sich etwas in Richtung seines geschlossenen Endes verjüngt und dessen geschlossenes Ende im geschlossenen Ende des Dämpfergehäuses 13 angeordnet und dessen offenes Ende mittels einer ringförmigen Fassung 15 im offenen Ende des Dämpfergehäuses 13 befestigt ist.

Das Dämpferelement 14 besteht aus einem Elastomer, der geschäumt sein kann. Das Dämpferelement 14 ist elastisch verformbar, wobei auch seine Wanddicke elastisch änderbar ist. Dabei ist das Dämpferelement 14 aufgrund der Materialeigenschaften des Elastomers, aus dem es besteht, verformungsdämpfend, d. h. es verbraucht bei einer elastischen Verformung Energie, wodurch es Druckänderungen eines Fluids, in der Ausführungsform Bremsflüssigkeit, dämpft.

Auf einer Außenseite schließt das Dämpferelement 14 ein Gas, beispielsweise Luft, zwischen sich und dem Dämpfergehäuse 13 ein, eine Innenseite kommuniziert mit der Druckseite der Hydropumpe 8.

Das Dämpferelement 14 ist dickwandig, womit eine Wanddicke im Verhältnis zu einem Innendurchmesser von mindestens 0,5 oder zu einem Außendurchmesser des Dämpferelements 14 von mindestens 0,25 oder zu einer Länge des Dämpferelements von mindestens 0,05 gemeint ist.

Das Dämpferelement 14 weist sowohl außen als auch innen eine umlaufende Wellung 16, 17 auf, die Wellung 16 auf der Außenseite des Dämpferelements 14 weist einen sinusförmigen Querschnitt auf. Auf der Innenseite weist das Dämpferelement 14 Wellenberge 18 und Wellentäler 19 auf. Die Wellenberge 18 sind innen im Dämpferelement 14 umlaufende Wulste mit beispielsweise bogenförmigem Querschnitt und die Wellentäler 19 sind innen im Dämpferelement 14 umlaufende Rinnen mit beispielsweise ebenfalls kreisbogenförmigem Querschnitt. Die Wellenberge 18 auf der Innenseite des Dämpferelements 14 befinden sich auf gleicher Höhe wie Wellentäler der Wellung 16 auf der Außenseite des Dämpferelements 14 und die Wellentäler 19 auf der Innenseite auf gleicher Höhe wie Wellenberge der Wellung 16 auf der Außenseite des Dämpferelements 14. Mit gleicher Höhe sind Radialebenen des Dämpferelements 14 gemeint. Eine Höhe bzw. Tiefe der Wellenberge 18 und Wellentäler 19 auf der Innenseite ist kleiner, d. h. die Wellung 17 auf der Innenseite des Dämpferelements 14 ist kleiner als die Wellung 16 auf der Außenseite. Im Bereich der Wellungen 16, 17 auf der Außen- und der Innenseite des Dämpferelements 14 ändert sich somit die Wanddicke des Dämpferelements 14 in dessen Längsrichtung, allerdings ist durch die Wellung 17 auf der Innenseite zusätzlich zur Wellung 16 auf der Außenseite des Dämpferelements 14 eine Wanddickenänderung in der Längsrichtung des Dämpferelements 14 kleiner als sie ohne die Wellung 17 auf der Innenseite wäre. Es ist auch möglich, als Wellung 17 auf der Innenseite entweder nur Wellenberge 18 oder nur Wellentäler 19 vorzusehen (nicht dargestellt).

## Patentansprüche

1. Druckänderungsdämpfer für eine schlupfgeregelte, hydraulische Fahrzeugbremsanlage (1), mit einem Dämpfergehäuse (13), in dem ein schlauchförmiges, elastisch verformbares Dämpferelement (14) angeordnet ist, das im Einsatz innen oder außen mit einem Fluid beaufschlagt ist, dessen etwaige Druckänderungen zu dämpfen sind, und das auf der Außenseite eine Wellung (16) aufweist, **dadurch gekennzeichnet, dass** das Dämpferelement (14) auf der Innenseite ebenfalls eine Wellung (17) aufweist, wobei Wellentäler der Wellung (17) an der Innenseite um weniger als eine halbe Wellenlänge versetzt zu Wellenberge der Wellung (16) an der Außenseite angeordnet sind, und Wellenberge der Wellung (17) an der Innenseite um weniger als eine halbe Wellenlänge versetzt um Wellentäler der Wellung (16) an der Außenseite angeordnet sind.

2. Druckänderungsdämpfer nach Anspruch 1, **dadurch gekennzeichnet, dass** das Dämpferelement (14) ein offenes und ein geschlossenes Ende aufweist.

3. Druckänderungsdämpfer nach Anspruch 1, **dadurch gekennzeichnet, dass** das Dämpferelement (14) dickwandig ist.

4. Druckänderungsdämpfer nach Anspruch 1, **dadurch gekennzeichnet, dass** das Dämpferelement (14) eine sich ändernde Wanddicke aufweist.

5. Druckänderungsdämpfer nach Anspruch 4, **dadurch gekennzeichnet, dass** die Wanddicke des Dämpferelements (14) im Bereich von Wellenbergen auf der Außenseite größer ist als im Bereich von Wellentälern auf der Außenseite.

6. Druckänderungsdämpfer nach Anspruch 1, **dadurch gekennzeichnet, dass** das Dämpferelement (14) eine elastisch veränderliche Wanddicke aufweist.

7. Druckänderungsdämpfer nach Anspruch 1, **dadurch gekennzeichnet, dass** das Dämpferelement (14) verformungsdämpfend ist.

8. Druckänderungsdämpfer nach Anspruch 1, **dadurch gekennzeichnet, dass** das Dämpferelement (14) ein Elastomer aufweist.

9. Hydraulische Fahrzeugbremsanlage mit einem Druckänderungsdämpfer (14) nach Anspruch 1.

10. Hydraulische Fahrzeugbremsanlage nach Anspruch 9, **dadurch gekennzeichnet, dass** die Fahrzeugbremsanlage (1) eine Hydropumpe (8) aufweist.

## Claims

1. Pressure variation damper for a slip-regulated, hydraulic vehicle brake system (1), with a damper housing (13), in which a tubular, elastically deformable damper element (14) is disposed, which, during use, is subjected on the inside or on the outside to a fluid, the possible pressure variations of which are to be damped, and which comprises a corrugation (16) on the outside, **characterized in that** the damper element (14) likewise comprises a corrugation (17) on the inside, wherein wave troughs of the corrugation (17) on the inside are arranged offset by less than a half-wavelength with respect to wave peaks of the corrugation (16) on the outside, and wave peaks of the corrugation (17) on the inside are arranged offset by less than a half-wavelength about wave troughs of the corrugation (16) on the outside.

2. Pressure variation damper according to Claim 1, **characterized in that** the damper element (14) comprises an open end and a closed end.

3. Pressure variation damper according to Claim 1, **characterized in that** the damper element (14) is thick-walled.

4. Pressure variation damper according to Claim 1, **characterized in that** the damper element (14) comprises a varying wall thickness.

5. Pressure variation damper according to Claim 4, **characterized in that** the wall thickness of the damper element (14) in the region of wave peaks on the outside is greater than in the region of wave troughs on the outside.

6. Pressure variation damper according to Claim 1, **characterized in that** the damper element (14) comprises an elastically variable wall thickness.

7. Pressure variation damper according to Claim 1, **characterized in that** the damper element (14) is deformation-damping.

8. Pressure variation damper according to Claim 1, **characterized in that** the damper element (14) comprises an elastomer.

9. Hydraulic vehicle brake system with a pressure variation damper (14) according to Claim 1.

10. Hydraulic vehicle brake system according to Claim 9, **characterized in that** the vehicle brake system (1) comprises a hydraulic pump (8).

## Revendications

1. Amortisseur de variations de pression pour une installation de frein de véhicule hydraulique à régulation du glissement (1), comprenant un boîtier d'amortisseur (13) dans lequel est disposé un élément d'amortissement (14) déformable élastiquement, en forme de tuyau, qui pendant l'utilisation, est sollicité à l'intérieur ou à l'extérieur avec un fluide dont les variations de pression éventuelles doivent être amorties, et qui présente, sur le côté extérieur, une ondulation (16),
**caractérisé en ce que** l'élément d'amortissement (14) présente sur le côté intérieur, également une ondulation (17), les creux d'ondulation de l'ondulation (17) au niveau du côté intérieur étant disposés de manière décalée de moins d'une demi-longueur d'onde par rapport aux sommets d'ondulation de l'ondulation (16) au niveau du côté extérieur et les sommets d'ondulation de l'ondulation (17) au niveau du côté intérieur étant disposés de manière décalée de moins d'une demi-longueur d'onde par rapport aux creux d'ondulation de l'ondulation (16) au niveau du côté extérieur.

2. Amortisseur de variations de pression selon la revendication 1, **caractérisé en ce que** l'élément d'amortissement (14) présente une extrémité ouverte et une extrémité fermée.

3. Amortisseur de variations de pression selon la revendication 1, **caractérisé en ce que** l'élément d'amortissement (14) présente des parois épaisses.

4. Amortisseur de variations de pression selon la revendication 1, **caractérisé en ce que** l'élément d'amortissement (14) présente une épaisseur de paroi variable.

5. Amortisseur de variations de pression selon la revendication 4, **caractérisé en ce que** l'épaisseur de paroi de l'élément d'amortissement (14) est plus grande dans la région de sommets d'ondulation du côté extérieur que dans la région de creux d'ondulation du côté extérieur.

6. Amortisseur de variations de pression selon la revendication 1, **caractérisé en ce que** l'élément d'amortissement (14) présente une épaisseur de paroi variant de manière élastique.

7. Amortisseur de variations de pression selon la revendication 1, **caractérisé en ce que** l'élément d'amortissement (14) amortit les déformations.

8. Amortisseur de variations de pression selon la revendication 1, **caractérisé en ce que** l'élément d'amortissement (14) présente un élastomère.

9. Installation de frein de véhicule hydraulique comprenant un amortisseur de variations de pression (14) selon la revendication 1.

10. Installation de frein de véhicule hydraulique selon la revendication 9, **caractérisée en ce que** l'installation de frein de véhicule (1) présente une pompe hydraulique (8).
